# FASCICULE DE BREVET EUROPEEN

(11) **EP 2 384 566 B1**
(45) Date de publication et mention de la délivrance du brevet: **08.04.2015**
(21) Numéro de dépôt: 10708253.9
(22) Date de dépôt: 01.02.2010
(51) Int. Cl.: H04L 12/28, H04L 29/08

(54) **DETECTION D'UN DISPOSITIF DE CONTROLE UPnP ET ÉTABLISSEMENT D'UNE CONNEXION AVEC UN TERMINAL**
ERKENNUNG EINER UPNP-ÜBERWACHUNGSVORRICHTUNG UND HERSTELLUNG EINER VERBINDUNG MIT EINEM ENDGERÄT
DETECTING A UPNP-MONITORING DEVICE AND ESTABLISHING A CONNECTION WITH A TERMINAL

(30) Priorité: 30.01.2009 FR 0950614
(43) Date de publication de la demande: 09.11.2011
(73) Titulaire: Orange, 75015 Paris (FR)
(72) Inventeur: MURPHY, Vincent, F-59110 La Madeleine (FR); AGRO, Roberto, F-92120 Montrouge (FR)
(86) Numéro de dépôt international: PCT/FR2010/050152
(87) Numéro de publication internationale: WO 2010/086570

(56) Documents cités:
- EP-A1- 1 809 003
- WO-A1-2007/140981
- US-A1- 2003 217 136
- US-A1- 2007 101 024

## Description

### Arrière-plan de l'invention

La présente invention se rapporte au domaine des réseaux de télécommunication dans lesquels les terminaux communiquent via le protocole UPnP défini par l'UPnP Forum et le Consortium DLNA. Il peut s'agir par exemple d'un réseau domestique (en anglais "home network"), ou d'un réseau local (LAN ou Local Area Network).

De façon connue, ce protocole vise à permettre l'interopérabilité et l'interconnexion d'équipements multimédia, sans configuration par l'utilisateur.

Dans la suite de la description, on parlera de réseau UPnP pour désigner un ensemble d'équipements interconnectés entre eux par réseau et utilisant le protocole UPnP pour communiquer entre eux à travers ce réseau.

Un dispositif est dit dispositif UPnP s'il est apte à communiquer au moyen d'un protocole de commande conforme au standard UPnP ou à un autre standard équivalent ou dérivé et/ou met en oeuvre une ou des fonctions définies dans un tel standard.

On distingue généralement, dans les architectures UPnP différents types de dispositifs UPnP: les dispositifs de contrôle DMC (Digital Media Controller), les serveurs de contenu DMS (Digital Media Server) et les dispositifs de restitution de contenu DMR (Digital Media Renderer), DMA (Digital Media Adapter) et DMP (Digital Media Player).

Dans un réseau UPnP, le dispositif de contrôle DMC a un rôle central en ce qu'il permet de découvrir les autres dispositifs UPnP du réseau, les services offerts par ces dispositifs, et la mise en relation d'un serveur DMS avec un dispositif de restitution DMR ou DMA pour que ce dispositif de restitution restitue un contenu multimédia identifié au niveau du serveur DMS.

La connaissance de l'existence, dans un réseau, d'un dispositif de contrôle DMC représente un atout supplémentaire pour le déploiement de services basés sur le protocole et l'architecture UPnP. Les inventeurs ont à ce propos constaté l'absence, aussi bien dans la norme UPnP que dans l'ensemble de l'état actuel de la technique, de solution technique pour détecter la présence dans un réseau d'un dispositif de contrôle DMC UPnP en vue d'établir une communication avec un tel dispositif.

Le document WO2007/140981 décrit un dispositif proxy (pont) apte à faire communiquer des dispositifs Bluetooth avec des dispositifs UPnP.

Le document EP1809003 décrit un dispositif (Middleware Device) apte à assurer la conversion de messages de découverte (discovery messages) basée sur différents protocoles, afin d'assurer la compatibilité entre des services UPnP et Web.

Le document US2007/0101024 décrit un dispositif proxy apte à convertir de l'information au format UPnP en information au format 1EEE1394.

Le document D4 US2003/0217136 une entité UPnP apte à découvrir des entités UPnP dans un réseau.

L'invention permet notamment de résoudre cet inconvénient.

### Objet et résumé de l'invention

Selon un premier aspect, l'invention concerne un procédé de mise en relation d'un dispositif de contrôle UPnP avec un module client, ce procédé étant mis en oeuvre par ce module client. Ce procédé comporte :
- une étape de diffusion d'une requête de recherche à travers un réseau de télécommunications;
- une étape de réception et de traitement d'au moins une première réponse à ladite requête, ladite réponse comportant des données d'adressage nécessaires pour communiquer avec au moins un module serveur, apte à déclencher sur commande une exécution par ledit dispositif de contrôle UPnP d'au moins une action prédéfinie.

Corrélativement, l'invention vise un module client apte à être incorporé dans un terminal, ce module client comportant :
- des moyens pour déclencher une diffusion d'une requête de recherche à travers un réseau de télécommunications ;
- des moyens de traitement d'au moins une première réponse à cette requête, ladite réponse comportant des données d'adressage nécessaires pour communiquer avec au moins un module serveur, apte à déclencher sur commande une exécution par un dispositif de contrôle UPnP d'au moins une action prédéfinie.

Grâce à l'invention, un terminal équipé du module client, qu'il s'agisse d'un terminal UPnP ou non, devient apte à communiquer avec un dispositif de contrôle UPnP suite à une phase de recherche et détection.

Selon ce premier aspect, l'invention permet donc à un terminal équipé d'un module client de communiquer avec un dispositif de contrôle UPnP via un module serveur, la recherche automatique des entités susceptibles de servir d'intermédiaire étant déclenchée par le module client incorporé dans ce terminal.

L'invention permet ainsi à un opérateur de proposer de nouveaux services sur la base des protocoles UPnP, DLNA et de leurs évolutions, à tout type de terminaux incorporant un tel module client.

Tout type d'équipement sera en outre susceptible de bénéficier de l'apport de l'invention, en ce qu'il suffit qu'il intègre un module client selon l'invention pour accéder au service de détection automatique et être mis en relation avec un dispositif de contrôle UPnP.

Dans un mode particulier de réalisation, le module serveur identifié est tel qu'il existe au moins un protocole de commande, convenant pour un envoi d'une dite commande et supporté à la fois par le module client et par le module serveur.

Dans une variante de ce mode de réalisation, la requête comporte, en tant que critère de recherche, un identifiant d'au moins un dit protocole de commande. Dans ce cas, le module de traitement n'envoie des données d'adressage que pour le ou les modules serveurs qui supporte ce protocole. Selon une autre variante, lorsqu'un seul protocole est susceptible d'être utilisé par le module client et par le module serveur, ou lorsqu'au moins un protocole est supporté par défaut à la fois par le module client et par le module serveur, il n'est pas nécessaire de transmettre un tel identifiant, ni de vérifier l'existence d'un tel protocole.

Dans un mode particulier de réalisation, le procédé de mise en relation selon l'invention comprend en outre:
- une étape d'envoi d'une commande à un module serveur pour lequel une première réponse a été émise, afin que le module serveur considéré déclenche une exécution, par un dispositif de contrôle UPnP, d'une action correspondant à la commande ; et
- une étape de traitement d'au moins une deuxième réponse comportant au moins une information générée par le dispositif de contrôle UPnP en réponse à cette action.

Selon un deuxième aspect, l'invention vise un procédé de mise en relation d'un dispositif de contrôle UPnP avec un module client, ce procédé étant mis en oeuvre par un module de traitement de requête de recherche. Ce procédé comporte :
- une étape de réception d'une requête de recherche diffusée par le module client à travers un réseau de télécommunications ;
- une étape d'envoi d'au moins une réponse à cette requête, la réponse comportant des données d'adressage nécessaires pour communiquer avec au moins un module serveur apte à déclencher sur commande une exécution, par un dispositif de contrôle UPnP, d'au moins une action prédéfinie.

Dans un mode particulier de réalisation, la requête comporte, en tant que critère de recherche, un identifiant d'au moins un protocole de commande supporté par le terminal et destiné à être utilisé pour un envoi de commande du module client au module serveur.

Corrélativement, l'invention concerne également un module de traitement d'une requête de recherche diffusée par un module client à travers un réseau de télécommunications.

Ce module de traitement comporte des moyens de génération d'au moins une réponse destinée à être envoyée au module client, cette réponse comportant des données d'adressage nécessaires pour communiquer avec au moins un module serveur qui est apte à déclencher sur commande une exécution, par un dispositif de contrôle UPnP, d'au moins une action prédéfinie.

Corrélativement, l'invention concerne également un module serveur connu d'un module de traitement tel que mentionné ci-dessus. Ce module serveur comporte des moyens de déclenchement de l'exécution, par un dispositif de contrôle UPnP, d'une action correspondant à une commande émise par un module client selon l'invention.

Dans un mode particulier de réalisation, ce module serveur comporte en outre :
- des moyens de traitement d'au moins une deuxième réponse comportant au moins une information générée par ledit dispositif de contrôle UPnP en réponse à ladite action ; et
- des moyens de traduction de cette deuxième réponse en une troisième réponse, comportant la ou les informations obtenues et destinée à être envoyée au module client.

Le module de traitement selon l'invention peut être mis en oeuvre dans une entité physique distincte de celle intégrant le module serveur et distincte également de celle intégrant le dispositif de contrôle UPnP ; ou bien être intégré dans une entité physique intégrant le module serveur, voire le dispositif de contrôle UPnP. Ainsi la localisation physique dans le réseau du module de traitement, du module serveur et du dispositif de contrôle UPnP peut être adaptée à l'architecture de service dans laquelle est mise en oeuvre cette invention.

Quelle que soit l'architecture choisie, le module de traitement et le module serveur sont aptes à communiquer avec le dispositif de contrôle UPnP selon ce qui est décrit pour chacune de ces entités. Dans un mode de réalisation particulier, le module de traitement, le module serveur et le dispositif de contrôle UPnP constituent chacun un sous-programme d'un même programme informatique, et sont donc exécutés par un processeur d'une même entité physique.

Le rôle principal du module de traitement est de recevoir les requêtes diffusées par un module client selon l'invention puis d'indiquer à ce module client comment communiquer avec un module serveur apte déclencher, sur commande du module client, l'exécution d'actions UPnP par un dispositif de contrôle UPnP.

Le mécanisme de détection automatique proposé par l'invention peut donc être mis en oeuvre au sein d'un dispositif d'intermédiation, intégrant le module de traitement et/ou le module serveur, ce qui réduit le coût de développement des terminaux susceptibles d'accéder à ce service de détection automatique.

Conformément à l'invention, le mécanisme de détection automatique d'un dispositif de contrôle UPnP est initié lorsque le module client diffuse une requête de recherche à travers le réseau.

Bien entendu, il se peut que plusieurs modules de traitement conformes à l'invention répondent à une telle requête ou que plusieurs modules serveurs répondant aux critères de recherche soient détectés.

Plusieurs mécanismes peuvent alors être mis en oeuvre au sein du module client selon l'invention pour choisir l'entité apte à mettre en relation ce module client avec ce dispositif de contrôle UPnP, cette entité étant nommée ici aussi "module serveur".

Par exemple, le module client peut choisir l'entité indiquée dans la première réponse reçue par ce module client consécutivement à la diffusion de la requête.

Dans un mode particulier de réalisation de l'invention, le module de traitement de requête de recherche selon l'invention insère, dans la réponse à la requête diffusée, avec les données d'adressage de l'entité, un poids (ou « poids ») représentatif de caractéristiques fonctionnelles ou de la localisation du dispositif de contrôle UPnP, ce poids étant utilisé par le module client selon l'invention pour sélectionner une entité répondant à la requête de recherche.

Dans un mode particulier de réalisation de l'invention, le module de traitement de requête de recherche selon l'invention insère, dans la réponse à la requête diffusée, avec les données d'adressage du module serveur, non pas un poids, mais une description du dispositif de contrôle UPnP, cette description étant utilisée par le module client selon l'invention pour sélectionner un module serveur répondant à la requête de recherche.

Dans un mode de réalisation, ce poids (ou cette description) est déterminé par le dispositif de contrôle UPnP à son démarrage, le poids (ou la description) étant transmis ensuite au module de traitement chargé de faire la liaison avec le module serveur associé. Ce poids (ou cette description) peut également être stocké dans un fichier de configuration accessible à la fois par le module de traitement et le dispositif de contrôle UPnP.

Corrélativement, le module client sélectionne, parmi les modules serveurs pour lesquels une première réponse a été émise, un module serveur auquel envoyer une commande, en fonction du poids (ou de la description) comprise dans la première réponse.

Dans un mode particulier de réalisation de l'invention, le module client selon l'invention génère une alerte s'il ne reçoit pas, dans un intervalle de temps déterminé, une réponse à la requête diffusée.

Cette caractéristique permet avantageusement de prévenir l'utilisateur du terminal intégrant le module client qu'il n'existe pas de module serveur apte à mettre en relation ce terminal avec un dispositif de contrôle UPnP.

L'invention vise aussi un signal véhiculant une requête de recherche d'une entité qui soit apte à déclencher, sur commande d'un module client, une exécution d'au moins une action par un dispositif de contrôle UPnP et qui soit tel qu'il existe au moins un protocole de commande, convenant pour un envoi d'une dite commande et supporté à la fois par le module client et par le module serveur, ce signal étant destiné à être diffusé à travers un réseau de télécommunication par le module client.

L'invention vise aussi un signal véhiculant un message comprenant des données d'adressage nécessaires pour communiquer avec au moins un module serveur, ce message étant destiné à être transmis à un module client en réponse à une requête de recherche d'une entité qui soit apte à déclencher, sur commande du module client, une exécution d'au moins une action par un dispositif de contrôle UPnP.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Dans un mode particulier de réalisation, les différentes étapes du procédé de mise en relation selon l'invention sont déterminées par des instructions de programmes d'ordinateurs.

En conséquence, l'invention vise aussi un programme d'ordinateur, sur un support d'informations, ce programme comportant des instructions adaptées à la mise en oeuvre des étapes du procédé de mise en relation selon l'invention, étapes qui sont mises en oeuvre respectivement par le module client, le module de traitement de requête ou le module serveur.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disk) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente schématiquement un réseau informatique MN comprenant un terminal MT incorporant un module client conforme à l'invention, un dispositif d'intermédiation DMCP intégrant un module de traitement de requête de recherche et un module serveur conformes à l'invention, ainsi qu'un dispositif de contrôle UPnP DMC; et
- la figure 2 représente, sous forme d'organigramme, les principales étapes d'un procédé de mise en relation conformes à un mode particulier de réalisation de l'invention.

Le terme module correspond dans ce document aussi bien à un composant logiciel qu'à un composant matériel ou encore à un composant matériel programmable, avec ou sans processeur intégré.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. De la même manière, un composant matériel correspond à tout élément d'un ensemble matériel (ou hardware) apte à mettre en oeuvre une fonction ou un ensemble de fonctions, selon ce qui est décrit ci-dessous pour le module concerné.

### Description détaillée d'un mode de réalisation

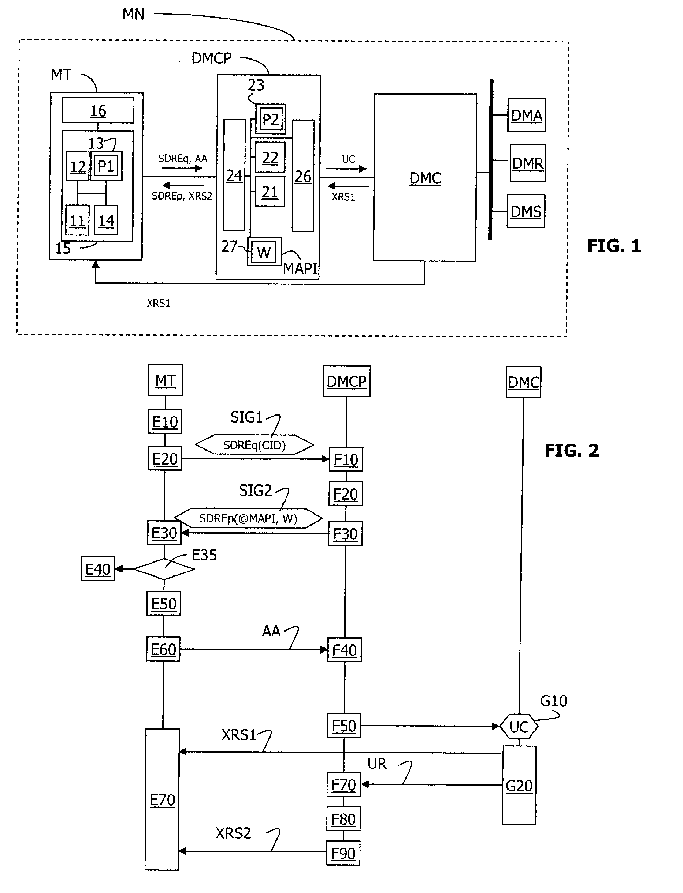

Sur la **figure 1** on a représenté un réseau domestique constitué, dans cet exemple, par un réseau MN, comprenant à la fois des équipements UPnP et des équipements non UPnP.

### Terminal MT

Dans l'exemple de réalisation décrit ici, le terminal MT a l'architecture matérielle d'un ordinateur. Le terminal MT peut être un terminal fixe ou mobile.

Le terminal MT comporte ainsi un processeur 11, une mémoire vive 12, une mémoire morte de type ROM 13, des moyens de communication 14 pour communiquer à travers le réseau MN, sous forme par exemple d'une interface WIFI dans le cas d'un terminal MT mobile, et une interface homme-machine 16.

On suppose, dans le mode de réalisation décrit ici, que le terminal MT n'est pas équipé de moyens de communication lui permettant de communiquer conformément au protocole UPnP avec un dispositif UPnP. Le terminal est dit "non UPnP".

Le terminal MT comporte également un module client P1 conforme à l'invention.

Dans le mode de réalisation décrit ici, le module client P1 est un module logiciel (ou programme d'ordinateur) stocké dans la mémoire morte 13.

Ce programme d'ordinateur P1 est conforme à l'invention et permet l'exécution d'un procédé de mise en relation selon l'invention dont les principales étapes E10 à E70 seront décrites en référence à la figure 2.

Dans l'exemple de réalisation décrit ici, les moyens de communication 14 du terminal MT sont aptes à envoyer des commandes au dispositif d'intermédiation DMCP, à recevoir des réponses provenant de ce dispositif d'intermédiation DMCP et également des messages de réponses, émis par le dispositif de contrôle UPnP DMC et ne transitant pas par le dispositif d'intermédiation DMCP.

Conformément à l'invention, le module client P1 du terminal MT est apte à déclencher, via les moyens de communication 14, la diffusion à travers le réseau MN de requêtes de recherche d'une entité apte à déclencher, sur commande du module client, l'exécution, par un dispositif de contrôle UPnP, d'une ou plusieurs actions prédéfinies. Ceci suppose notamment que l'entité considérée soit tel qu'il existe au moins un protocole de commande, supporté à la fois par le module client et cette entité, et convenant pour un envoi de commandes propres à commander le déclenchement, par Icette entité, de l'exécution, par un dispositif de contrôle UPnP, d'une ou plusieurs actions prédéfinies.

Dans l'exemple de réalisation décrit ici, les actions considérées sont celles définies pour un dispositif de contrôle DMC dans le standard UPnP : elles seront nommées actions UPnP. D'autres types actions peuvent également être déclenchées en cas de besoin.

Le module client P1 est également apte à traiter les éventuelles réponses reçues pour les requêtes de recherche qu'il émet.

Le module client P1 est en outre conçu pour activer les moyens de communication 14 afin de communiquer, par envoi de commandes, avec une entité détectée suite à un envoi de requête(s) de recherche telles que décrites ci-dessus.

### Dispositif d'intermédiation DMCP

Dans l'exemple de réalisation décrit ici, le dispositif d'intermédiation DMCP selon l'invention a l'architecture matérielle d'un ordinateur.

Il comporte notamment un processeur 21, une mémoire vive 22, une mémoire morte 23 de type ROM et des moyens de communication 24 pour communiquer via le réseau MN avec le terminal MT selon l'invention, par exemple sous forme d'interface Wifi, dans le cas d'un terminal MT mobile.

La mémoire morte de type ROM 23 comporte un programme d'ordinateur P2 conforme à l'invention pour l'exécution du procédé de mise en relation et dont les principales étapes F10 à F90 sont représentées à la figure 2.

Le programme P2 comporte notamment un module de traitement de requêtes de recherche, appelé plus simplement "module de traitement".

Conformément à l'invention, le module de traitement du dispositif d'intermédiation DMCP est apte à déterminer, sur réception d'une requête de recherche diffusée à travers le réseau MN, par le terminal MT ou toute autre entité du réseau, s'il a connaissance de l'existence d'une entité apte à déclencher l'exécution d'au moins une action par un dispositif de contrôle UPnP.

Ce dispositif d'intermédiation DMCP permet ainsi à un terminal MT incorporant un module client P1 conforme à l'invention de découvrir un dispositif de contrôle UPnP du réseau MN.

Dans le mode de réalisation particulier décrit ici, le dispositif d'intermédiation DMCP incorpore une entité, référencée MAPI, réalisée sous forme d'un module serveur, apte à communiquer par commande avec un module client, intégré dans un terminal ou un autre équipement.

Le module serveur MAPI du dispositif d'intermédiation DMCP est également apte à déclencher sur commande l'exécution, par un dispositif de contrôle UPnP, d'une ou plusieurs actions prédéfinies, notamment des actions UPnP.

Dans ce but, le dispositif d'intermédiation comporte également des moyens de communication 26, utilisés par le module serveur MAPI pour communiquer avec le dispositif de contrôle DMC.

Le module serveur MAPI intercepte les réponses émises par le dispositif de contrôle UPnP DMC et est apte à traduire et/ou reformater ces réponses en réponses conformes à un protocole de communication supporté par le terminal MT.

Le dispositif d'intermédiation DMPC peut être qualifié de dispositif proxy, en ce que, notamment de par la présence du module serveur MAPI, il sert d'intermédiaire entre le terminal MT et le dispositif de contrôle DMC, notamment en ce qu'il transmet des commandes à ce dispositif de contrôle selon ce qui lui est spécifié par requête par le terminal. Il est ainsi mandaté par le terminal pour l'envoi de commandes que le terminal n'est pas apte à envoyer lui-même. Réciproquement, il sert d'intermédiaire pour les réponses ou messages émis par le dispositif de contrôle UPnP à destination du terminal. Dans ce but, il met en oeuvre les éventuelles traductions ou adaptations protocolaires nécessaires pour que l'entité destinatrice des messages - le terminal MT ou le dispositif de contrôle DMC - reçoive des messages formatés conformément à un protocole que cette entité destinatrice supporte.

### Dispositif de contrôle UPnP DMC

Le dispositif de contrôle UPnP DMC du réseau MN met en oeuvre les fonctions définies pour un dispositif de contrôle dans le standard UPnP.

Le dispositif de contrôle UPnP DMC du réseau MN comprend en outre une interface de communication, convenant pour une communication - synchrone ou asynchrone - avec le module serveur MAPI du dispositif d'intermédiation DMCP. Une telle interface de communication n'est ni définie, ni prévue dans le standard UPnP : elle doit donc être conçue et développée spécifiquement pour la mise en oeuvre de l'invention. Elle peut utiliser tout mode de communication: communication synchrone par message, notifications asynchrones d'événements ou appel de fonction, du moment que ce mode de communication est adapté à l'envoi de commandes pour l'exécution par le dispositif de contrôle UPnP DMC d'actions UPnP.

Le dispositif de contrôle UPnP DMC du réseau MN est ainsi apte à recevoir, en provenance du module serveur conforme à l'invention, des appels de fonctions, notifications ou messages entraînant le déclenchement d'actions UPnP.

Suite à l'exécution de telles actions UPnP, le dispositif de contrôle UPnP DMC est conçu pour générer une réponse destinée à être transmise au module client. Le dispositif de contrôle UPnP DMC peut soit envoyer cette réponse au module serveur en vue de sa transmission ultérieure au module client, soit envoyer une réponse directement au module client du terminal MT, sans passer par le module serveur.

### Procédé de mise en relation

En référence à la **figure 2****,** nous allons maintenant décrire un scénario de mise en oeuvre grâce à l'invention, dans lequel le terminal MT découvre puis communique avec le dispositif de contrôle UPnP DMC via le dispositif d'intermédiation DMCP conforme à l'invention.

Dans cette figure :
- les étapes E10 à E70 sont des étapes d'un procédé de mise en relation, conforme à l'invention, mis en oeuvre par le terminal MT, notamment par le module client P1 du terminal MT ;
- les étapes F10 à F90 sont des étapes d'un procédé de mise en relation conforme à l'invention mis en oeuvre par le dispositif d'intermédiation DMCP , notamment par le module de traitement P2 ou le module serveur MAPI; et
- les étapes G10 et G20 sont des étapes mises en oeuvre par le dispositif de contrôle UPnP DMC.

La procédure de détection peut être déclenchée soit au démarrage du terminal intégrant le module client, soit suite à une action utilisateur sur ce terminal.

On suppose, dans cet exemple, que juste avant d'émettre une requête de diffusion, le terminal MT déclenche un chronomètre, au cours d'une étape E10.

Puis, au cours d'une étape E20, le terminal MT diffuse, en mode "multicast", une requête de recherche SDReq dans le réseau MN, afin de déterminer s'il existe dans ce réseau MN une entité qui soit apte à déclencher sur commande l'exécution d'actions prédéfinies par un dispositif de contrôle UPnP. Une telle entité est donc une entité disposant d'une interface de communication adaptée à la communication avec un ou plusieurs dispositifs de contrôle UPnP DMC associés à cette entité.

Une diffusion en mode multicast permet d'atteindre potentiellement tout dispositif du réseau apte à recevoir une telle requête de recherche et ainsi espérer qu'un des dispositifs atteints sera en mesure de traiter cette requête. Une diffusion en mode "broadcast" serait également appropriée pour une telle recherche.

Dans le mode de réalisation décrit ici, la diffusion de la requête de recherche est effectuée au démarrage du terminal MT. En variante, elle peut aussi être effectuée lorsque le terminal MT entre dans la couverture d'une zone WiFi ou par action volontaire de l'utilisateur.

La requête de recherche SDReq comporte différents paramètres de recherche, définissant des critères de recherche.

Elle comprend notamment un code représentatif du type d'entité recherché, en l'occurrence un code associé à une entité apte à déclencher l'exécution d'actions UPnP.

Cette requête de recherche comporte également au moins un identifiant CID d'un protocole supporté par le terminal MT. Ce protocole de communication peut par exemple être choisi parmi les protocoles RPC, SOAP (Simple Object Access Protocol) ou REST (REpresentational State Transfer). La présence d'un tel identifiant est utile pour sélectionner un protocole parmi plusieurs protocoles de commandes, supportés par le module client et utilisables pour un envoi de commande du module client à l'entité recherchée.

Lorsqu'un seul protocole est supporté à la fois par le module client et la ou les entités parmi lesquelles s'effectue la recherche, et que le choix de ce protocole est implicite dans la recherche de l'entité, il n'est pas nécessaire que la requête de recherche comprenne un tel identifiant.

Dans le mode de réalisation décrit ici, l'invention fait appel au mécanisme de découverte existant dans le protocole SSDP. La requête de recherche SDReq émise par le terminal est ainsi constituée par un message M-SEARCH défini dans le protocole SSDP (Simple Service Discovery Protocole), l'entête de ce message comportant l'identifiant du protocole précité.

L'invention tire avantageusement profit, du mécanisme de découverte SSDP. Tout autre protocole proposant un mécanisme de découverte est toutefois utilisable pour la mise en oeuvre de l'invention et l'envoi de la requête de recherche.

Dans le mode de réalisation décrit ici, la requête de recherche est véhiculée par un signal SIG1 conforme à l'invention.

Dans le mode de réalisation décrit ici, le module de traitement du dispositif d'intermédiation DMCP est conçu pour être à l'écoute sur un port SSDP ouvert, afin de détecter l'émission de requêtes de recherche SSDP via le réseau MN. Nous supposerons que la requête de recherche SDReq émise par le terminal MT est reçue et traitée par le module de traitement du dispositif d'intermédiation DMCP au cours d'une étape F10.

Au cours d'une étape F20, le module de traitement du dispositif d'intermédiation DMCP recherche s'il a connaissance de l'existence d'une entité apte à déclencher l'exécution d'au moins une action UPnP par un dispositif de contrôle UPnP. C'est notamment le cas lorsque le dispositif d'intermédiation DMCP incorpore une telle entité ou lorsqu'une telle entité a préalablement été déclarée auprès du module de traitement, suite par exemple à une procédure d'identification déclenchée à l'initiative, soit du module serveur, soit du module de traitement ou lorsque le dispositif de contrôle s'est déclaré lui-même auprès du module de traitement.

Si le module de traitement du dispositif d'intermédiation DMCP a connaissance de l'existence d'une telle entité, le module de traitement répond positivement au terminal MT, au cours d'une étape F30, par l'envoi, en mode unicast, d'une réponse SDRep, cette réponse comportant des données (@MAPI) d'adressage nécessaires pour permettre au module client émetteur de la requête de recherche de communiquer avec cette entité, en l'occurrence, avec le module serveur.

De telles données d'adressage comprennent par exemple un identifiant de cette entité, sous forme d'adresse - adresse IP (Internet Protocol) notamment, de code ou de nom de machine, identifiant à partir duquel une communication peut être établie avec l'entité considérée.

Ces données peuvent comprendre également, selon le besoin, un numéro de port, ou une adresse de type URL (« Uniform Ressource Locator ») ou toute autre information utile ou nécessaire pour un établissement d'une communication sous une forme ou une autre.

Dans l'exemple de réalisation décrit ici, la réponse SDREp comporte en outre, pour chacun des dispositifs de contrôle UPnP adressables via cette entité MAPI, un poids W représentatif de caractéristiques fonctionnelles (un numéro de version matériel ou logiciel) et/ou de la localisation (localisation physique et/ou identification et/ou type d'équipement incorporant le dispositif de contrôle UPnP : Set-Top-Box, unité de stockage NAS, passerelle domestique, ...) et/ou d'une capacité de traitement (puissance du processeur, capacité mémoire, capacité dynamique en pourcentage de puissance ou de mémoire utilisée, etc) du dispositif de contrôle UPnP considéré.

En alternative, au lieu d'un poids, est envoyée une description des caractéristiques fonctionnelles et/ou de la localisation et/ou d'une capacité de traitement de chaque dispositif de contrôle DMC concerné. L'entité cliente qui reçoit cette description est alors apte à choisir, selon des critères qui lui sont propres, quel est le dispositif de contrôle DMC qu'elle souhaite utiliser et commander via l'entité MAPI.

Cette réponse SDRep est véhiculée par un signal SIG2 conforme à l'invention.

Nous supposerons que cette réponse est reçue par le terminal MT au cours d'une étape E30 et qu'elle contient des données d'adressage associées au module serveur MAPI, répondant aux critères de recherche contenus dans la requête SDReq.

Au cours d'un test E35, le terminal MT vérifie s'il a reçu une réponse à sa requête de diffusion SDReq dans un délai déterminé après le déclenchement du chronomètre effectué à l'étape E10.

Si ce n'est pas le cas, il génère un message d'alerte à l'étape E40, affiché par exemple sur l'interface homme-machine 16.

En cas de présence dans le réseau MN d'une pluralité d'entités répondant aux critères de recherche, le terminal MT recevra plusieurs réponses à sa requête, ou, dans l'hypothèse où le protocole de découverte utilisé le permet, une réponse comprenant plusieurs jeux de données d'adressage associés chacun à une des entités répondant aux critères de recherche. Dans une telle situation, le terminal MT sélectionne, au cours d'une étape E50, une des entités détectées.

Cette sélection s'effectue notamment en fonction des poids W transmis avec la ou les réponses: le terminal MT peut ainsi sélectionner une entité selon la valeur du poids, en rapport avec une localisation et/ou des caractéristiques fonctionnelles correspondent à son besoin. Lorsque le poids est déterminé de manière à ce qu'il soit représentatif d'un niveau de performance: (le poids le plus élevé étant associé au dispositif possédant les caractéristiques fonctionnelles les plus complètes ou possédant le numéro de version logicielle le plus élevé), la sélection s'effectuera dans ce cas en choisissant simplement l'entité de poids le plus élevé. Tout au mode de codage du point est cependant envisageable.

Conformément à l'invention, lorsque le terminal MT souhaite ensuite envoyer une commande AA à un dispositif de contrôle UPnP DMC associé à l'entité sélectionnée à l'étape E50, il envoie cette commande AA à l'entité sélectionnée, c'est-à-dire, dans le mode de réalisation décrit ici, au module serveur MAPI du dispositif d'intermédiation DMCP, cette commande étant conforme à un protocole de communication supporté à la fois par le terminal MT et l'entité MAPI sélectionnée.

Nous supposerons qu'une telle commande AA est envoyée par le terminal MT au cours d'une étape E60 et reçue par le module serveur MAPI du dispositif d'intermédiation DMCP au cours d'une étape F40.

Sur réception de cette commande AA, le module serveur MAPI du dispositif d'intermédiation DMCP analyse la commande AA afin de déterminer quelle est l'action à exécuter. L'action est identifiée dans la commande par un code et est accompagnée selon le besoin d'un ou plusieurs paramètres à utiliser lors de l'exécution de cette action.

Lorsqu'un mode de communication par appel de procédure distante (Remote Procédure Call, RPC) est utilisé pour la communication entre le module serveur MAPI et le dispositif de contrôle DMC, le module serveur MAPI du dispositif d'intermédiation DMCP détermine quelle est, parmi les fonctions implémentées dans l'interface applicative (API, Application Program Interface) du dispositif de contrôle UPnP DMC, la fonction correspondant à l'action identifiée dans la commande AA. Puis le module serveur MAPI déclenche l'exécution de cette fonction par appel de fonction, au moyen d'une interface logicielle API appropriée, afin que le dispositif de contrôle exécute une action UPnP correspondant à la commande AA.

Nous supposerons que le dispositif de contrôle UPnP DMC exécute cette action UPnP UC au cours d'une étape G10.

Suite à l'exécution de cette action, le dispositif de contrôle UPnP DMC répond par retour de fonction, envoyant selon l'action exécutée, la ou les paramètres éventuellement attendus en réponse.

En variante, notamment lorsqu'un mode de communication par messages ou notifications asynchrones est utilisé pour la communication entre le module serveur MAPI et le dispositif de contrôle DMC, une réponse peut être envoyée, soit sous forme d'un message UR émis à destination du module serveur, soit sous forme d'un message XML XRS 1 envoyé directement à destination du terminal MT, sans passer par l'intermédiaire du module serveur MAPI.

Qu'elle que soit la variante, lorsque le module serveur MAPI du dispositif d'intermédiation DMCP reçoit une réponse (étape F70), il traduit cette réponse en au moins un message XRS2 conforme au protocole supporté à la fois par le terminal MT et par le dispositif d'intermédiation (étape F80).

Ce message XRS2 est envoyé par le module serveur MAPI au terminal MT au cours d'une étape F90.

Quoi qu'il en soit, le terminal MT reçoit la réponse à sa commande AA:
- soit sous la forme d'un message XRS1, au format XML, envoyé par le dispositif de contrôle UPnP DMC,
- soit sous la forme d'un message XRS2, envoyé par le module serveur du dispositif d'intermédiation DMCP, conforme au protocole supporté par le module client du terminal MT et le module serveur du dispositif d'intermédiation (étape E70).

## Revendications

1. Procédé de mise en relation d'un dispositif de contrôle UPnP (DMC) avec un module client, le procédé étant mis en oeuvre par le module client et comportant :
- une étape (E20) de diffusion d'une requête de recherche (SDReq) à travers un réseau de télécommunications (MN);
- une étape (E30) de réception et de traitement d'au moins une première réponse (SDRep) à ladite requête, ladite réponse comportant des données (@MAPI) d'adressage nécessaires pour communiquer avec au moins un module serveur (MAPI), apte à déclencher sur commande une exécution par ledit dispositif de contrôle UPnP (DMC) d'au moins une action (UC) prédéfinie.

2. Procédé selon la revendication 1, dans lequel le module serveur identifié est tel qu'il existe au moins un protocole de commande, convenant pour un envoi d'une dite commande et supporté à la fois par le module client et par le module serveur.

3. Procédé selon la revendication 2, dans lequel ladite requête comporte, en tant que critère de recherche, un identifiant (CID) d'au moins un dit protocole de commande.

4. Procédé selon la revendication 1, comprenant une étape (E50) de sélection, parmi les modules serveurs (MAPI) pour lesquels une première réponse a été émise, d'un module serveur (MAPI) auquel envoyer une commande (AA), en fonction d'un poids (W) compris dans ladite au moins une première réponse (SDRep) et représentatif de caractéristiques fonctionnelles ou de la localisation du dispositif de contrôle UPnP (DMC).

5. Procédé selon la revendication 1, comprenant une étape (E50) de sélection, parmi les modules serveurs (MAPI) pour lesquels une première réponse a été émise, d'un module serveur (MAPI) auquel envoyer une commande (AA), en fonction d'une description du dispositif de contrôle UPnP (DMC) comprise dans ladite au moins une première réponse (SDRep).

6. Procédé selon la revendication 1, comprenant en outre:
- une étape (E60) d'envoi d'une commande (AA) à un module serveur (MAPI) pour lequel une première réponse a été émise, afin que le module serveur considéré déclenche (F50) une exécution, par un dispositif de contrôle UPnP (DMC), d'une action (UC) correspondant à ladite commande (AA); et
- une étape (E70) de traitement d'au moins une deuxième réponse (XRS1, XRS2) comportant au moins une information générée par ledit dispositif de contrôle UPnP (DMC) en réponse à ladite action (UC).

7. Procédé de mise en relation d'un dispositif de contrôle UPnP (DMC) avec un module client (P1), ce procédé étant mis en oeuvre par un module de traitement de requête de recherche et comportant :
- une étape (F10) de réception d'une requête de recherche (SDReq) diffusée par ledit module client (P1) à travers un réseau de télécommunications (MN);
- une étape (F30) d'envoi d'au moins une réponse (SDRep) à ladite requête, ladite réponse comportant des données (@MAPI) d'adressage nécessaires pour communiquer avec au moins un module serveur (MAPI), apte à déclencher sur commande une exécution par un dispositif de contrôle UPnP (DMC) d'au moins une action (UC) prédéfinie.

8. Procédé selon la revendication 7, dans lequel ladite réponse (SDRep) comporte un poids (W) représentatif de caractéristiques fonctionnelles ou de la localisation du dispositif de contrôle UPnP (DMC).

9. Procédé selon la revendication 7, dans lequel ladite réponse (SDRep) comporte une description du dispositif de contrôle UPnP (DMC).

10. Procédé selon la revendication 7, dans lequel ladite requête comporte, en tant que critère de recherche, un identifiant (CID) d'au moins un protocole de commande supporté par un terminal (MT) et destiné à être utilisé pour un envoi de commande du module client (P1) au module serveur.

11. Module client (P1), apte à être incorporé dans un terminal (MT), ce module client comportant :
- des moyens pour déclencher une diffusion d'une requête de recherche (SDReq) à travers un réseau de télécommunications (MN);
- des moyens de traitement d'au moins une première réponse (SDRep) à ladite requête, ladite réponse comportant des données (@MAPI) d'adressage nécessaires pour communiquer avec au moins un module serveur (MAPI), apte à déclencher sur commande une exécution par un dispositif de contrôle UPnP (DMC) d'au moins une action (UC) prédéfinie.

12. Module de traitement (P2) d'une requête de recherche diffusée par un module client (P1) à travers un réseau de télécommunications (MN), ledit module de traitement comportant des moyens de génération d'au moins une réponse (SDRep) destinée à être envoyée audit module client, ladite réponse comportant des données (@MAPI) d'adressage nécessaires pour communiquer avec au moins un module serveur (MAPI), qui est apte à déclencher sur commande une exécution par un dispositif de contrôle UPnP (DMC) d'au moins une action (UC) prédéfinie.

13. Module serveur (MAPI), connu d'un module de traitement selon la revendication 12, le module serveur comportant des moyens de déclenchement (F50) de l'exécution, par un dispositif de contrôle UPnP (DMC), d'une action (UC) correspondant à une commande (AA) émise par un module client selon la revendication 11.

14. Support d'enregistrement comportant des instructions de programme pour l'exécution des étapes d'un procédé selon l'une quelconque des revendications 1 à 10 lorsque ledit programme est exécuté par un processeur de données (11; 21).

15. Signal (SIG1) véhiculant une requête (SDReq) de recherche d'une entité qui soit apte à déclencher, sur commande d'un module client, une exécution d'au moins une action (UC) par un dispositif de contrôle UPnP (DMC) et qui soit telle qu'il existe au moins un protocole de commande, convenant pour un envoi d'une dite commande et supporté à la fois par le module client et par le module serveur, ledit signal étant destiné à être diffusé à travers un réseau de télécommunication par ledit module client.

16. Signal (SIG2) véhiculant un message (SDRep) comprenant des données (@MAPI) d'adressage nécessaires pour communiquer avec au moins un module serveur (MAPI), ledit message étant destiné à être transmis à un module client en réponse à une requête (SDReq) de recherche d'une entité qui soit apte à déclencher, sur commande du module client, une exécution d'au moins une action (UC) par un dispositif de contrôle UPnP (DMC).

## Patentansprüche

1. Verfahren zum Verbinden einer UPnP-Steuervorrichtung (DMC) mit einem Client-Modul, wobei das Verfahren von dem Client-Modul durchgeführt wird und aufweist:
- einen Schritt (E20) des Rundsendens einer Suchanfrage (SDReq) über ein Telekommunikationsnetz (MN);
- einen Schritt (E30) des Empfangs und der Verarbeitung mindestens einer ersten Antwort (SDRep) auf die Anfrage, wobei die Antwort Adressierungsdaten (@MAPI) aufweist, die erforderlich sind, um mit mindestens einem Servermodul (MAPI) zu kommunizieren, das geeignet ist, auf Befehl eine Ausführung mindestens einer vordefinierten Aktion (UC) durch die UPnP-Steuervorrichtung (DMC) auszulösen.

2. Verfahren nach Anspruch 1, wobei das identifizierte Servermodul so beschaffen ist, dass mindestens ein Befehlsprotokoll existiert, das für ein Senden eines solchen Befehls geeignet ist und sowohl von dem Client-Modul als auch von dem Servermodul unterstützt wird.

3. Verfahren nach Anspruch 2, wobei die Anfrage als Suchkriterium eine Kennung (CID) mindestens eines solchen Befehlsprotokolls aufweist.

4. Verfahren nach Anspruch 1, welches einen Schritt (E50) der Auswahl, aus den Servermodulen (MAPI), für welche eine erste Antwort ausgesendet worden ist, eines Servermoduls (MAPI), an das ein Befehl (AA) gesendet werden soll, aufweist, in Abhängigkeit von einem Gewicht (W), das in der mindestens einen ersten Antwort (SDRep) enthalten ist und für funktionelle Eigenschaften oder den Ort der UPnP-Steuervorrichtung (DMC) repräsentativ ist.

5. Verfahren nach Anspruch 1, welches einen Schritt (E50) der Auswahl, aus den Servermodulen (MAPI), für welche eine erste Antwort ausgesendet worden ist, eines Servermoduls (MAPI), an das ein Befehl (AA) gesendet werden soll, aufweist, in Abhängigkeit von einer Beschreibung der UPnP-Steuervorrichtung (DMC), die in der mindestens einen ersten Antwort (SDRep) enthalten ist.

6. Verfahren nach Anspruch 1, welches außerdem aufweist:
- einen Schritt (E60) des Sendens eines Befehls (AA) an ein Servermodul (MAPI), für welches eine erste Antwort ausgesendet worden ist, damit das betreffende Servermodul eine Ausführung einer dem Befehl (AA) entsprechenden Aktion (UC) durch eine UPnP-Steuervorrichtung (DMC) auslöst (F50); und
- einen Schritt (E70) der Verarbeitung mindestens einer zweiten Antwort (XRS1, XRS2), die mindestens eine von der UPnP-Steuervorrichtung (DMC) in Reaktion auf die Aktion (UC) erzeugte Information aufweist.

7. Verfahren zum Verbinden einer UPnP-Steuervorrichtung (DMC) mit einem Client-Modul (P1), wobei das Verfahren von einem Suchanfragen-Verarbeitungsmodul durchgeführt wird und aufweist:
- einen Schritt (F10) des Empfangs einer Suchanfrage (SDReq), die von dem Client-Modul (P1) über ein Telekommunikationsnetz (MN) rundgesendet wird;
- einen Schritt (F30) des Sendens mindestens einer Antwort (SDRep) auf die Anfrage, wobei die Antwort Adressierungsdaten (@MAPI) aufweist, die erforderlich sind, um mit mindestens einem Servermodul (MAPI) zu kommunizieren, das geeignet ist, auf Befehl eine Ausführung mindestens einer vordefinierten Aktion (UC) durch eine UPnP-Steuervorrichtung (DMC) auszulösen.

8. Verfahren nach Anspruch 7, wobei die Antwort (SDRep) ein Gewicht (W) enthält, das für funktionelle Eigenschaften oder den Ort der UPnP-Steuervorrichtung (DMC) repräsentativ ist.

9. Verfahren nach Anspruch 7, wobei die Antwort (SDRep) eine Beschreibung der UPnP-Steuervorrichtung (DMC) enthält.

10. Verfahren nach Anspruch 7, wobei die Anfrage als Suchkriterium eine Kennung (CID) mindestens eines Befehlsprotokolls aufweist, das von einem Endgerät (MT) unterstützt wird und dazu bestimmt ist, für ein Senden eines Befehls des Client-Moduls (P1) an das Servermodul verwendet zu werden.

11. Client-Modul (P1), welches geeignet ist, in ein Endgerät (MT) integriert zu werden, wobei dieses Client-Modul aufweist:
- Mittel zum Auslösen eines Rundsendens einer Suchanfrage (SDReq) über ein Telekommunikationsnetz (MN);
- Mittel zur Verarbeitung mindestens einer ersten Antwort (SDRep) auf die Anfrage, wobei die Antwort Adressierungsdaten (@MAPI) aufweist, die erforderlich sind, um mit mindestens einem Servermodul (MAPI) zu kommunizieren, das geeignet ist, auf Befehl eine Ausführung mindestens einer vordefinierten Aktion (UC) durch eine UPnP-Steuervorrichtung (DMC) auszulösen.

12. Verarbeitungsmodul (P2) zur Verarbeitung einer Suchanfrage, die von einem Client-Modul (P1) über ein Telekommunikationsnetz (MN) rundgesendet wurde, wobei das Verarbeitungsmodul Mittel zur Erzeugung mindestens einer Antwort (SDRep), die dazu bestimmt ist, an das Client-Modul gesendet zu werden, aufweist, wobei die Antwort Adressierungsdaten (@MAPI) aufweist, die erforderlich sind, um mit mindestens einem Servermodul (MAPI) zu kommunizieren, das geeignet ist, auf Befehl eine Ausführung mindestens einer vordefinierten Aktion (UC) durch eine UPnP-Steuervorrichtung (DMC) auszulösen.

13. Servermodul (MAPI), welches einem Verarbeitungsmodul nach Anspruch 12 bekannt ist, wobei das Servermodul Auslösemittel (F50) zum Auslösen der Ausführung einer Aktion (UC), die einem von einem Client-Modul nach Anspruch 11 gesendeten Befehl (AA) entspricht, durch eine UPnP-Steuervorrichtung (DMC) aufweist.

14. Aufzeichnungsmedium, welches Programmanweisungen für die Ausführung der Schritte eines Verfahrens nach einem der Ansprüche 1 bis 10, wenn dieses Programm von einem Datenprozessor (11; 21) ausgeführt wird, aufweist.

15. Signal (SIG1), welches eine Suchanfrage (SDReq) nach einer Einheit transportiert, welche geeignet ist, auf Befehl eines Client-Moduls eine Ausführung mindestens einer Aktion (UC) durch eine UPnP-Steuervorrichtung (DMC) auszulösen, und welche so beschaffen ist, dass mindestens ein Befehlsprotokoll existiert, das für ein Senden eines solchen Befehls geeignet ist und sowohl von dem Client-Modul als auch von dem Servermodul unterstützt wird, wobei das Signal dazu bestimmt ist, von dem Client-Modul über ein Telekommunikationsnetz rundgesendet zu werden.

16. Signal (SIG2), welches eine Nachricht (SDRep) transportiert, die Adressierungsdaten (@MAPI) enthält, die erforderlich sind, um mit mindestens einem Servermodul (MAPI) zu kommunizieren, wobei die Nachricht dazu bestimmt ist, an ein Client-Modul in Reaktion auf eine Suchanfrage (SDReq) nach einer Einheit, welche geeignet ist, auf Befehl eines Client-Moduls eine Ausführung mindestens einer Aktion (UC) durch eine UPnP-Steuervorrichtung (DMC) auszulösen, gesendet zu werden.

## Claims

1. Method for linking a UPnP-controller device (DMC) to a client module, the method being implemented by the client module and including:
- a step (E20) of broadcasting a search request (SDReq) over a telecommunications network (MN);
- a step (E30) of receiving and processing at least one first reply (SDRep) to said request, said reply including addressing data (@MAPI) required to communicate with at least one server module (MAPI), fitted to trigger on command an execution by said UPnP-controller device (DMC) of at least one predefined action (UC).

2. Method according to Claim 1, in which the identified server module is such that there is at least one command protocol, suitable for sending a said command and supported by both the client module and the server module.

3. Method according to Claim 2, in which said request includes, as search criterion, an identifier (CID) of at least one said command protocol.

4. Method according to Claim 1, comprising a step (E50) of selecting, from among the server modules (MAPI) for which a first reply has been issued, of a server module (MAPI) to which to send a command (AA), as a function of a weight (W) comprised in said at least one first reply (SDRep) and representative of functional characteristics or the location of the UPnP-controller device (DMC).

5. Method according to Claim 1, comprising a step (E50) of selecting, among the server modules (MAPI) for which a first reply has been issued, of a server module (MAPI) to which to send a command (AA), as a function of a description of the UPnP-controller device (DMC) included in said at least one first reply (SDRep).

6. Method according to Claim 1, furthermore comprising:
- a step (E60) of sending a command (AA) to a server module (MAPI) for which a first reply has been issued, in order for the server module under consideration to trigger (F50) an execution, by a UPnP-controller device (DMC), of an action (UC) corresponding to said command (AA); and
- a step (E70) of processing at least one second reply (XRS1, XRS2) including at least one item of information generated by said UPnP-controller device (DMC) in reply to said action (UC).

7. Method for linking a UPnP-controller device (DMC) to a client module (P1), this method being implemented by a search request processing module and including:
- a step (F10) of receiving a search request (SDReq) broadcast by said client module (P1) over a telecommunications network (MN);
- a step (F30) of sending at least one reply (SDRep) to said request, said reply including addressing data (@MAPI) required to communicate with at least one server module (MAPI), fitted to trigger on command an execution by a UPnP-controller device (DMC)of at least one predefined action (UC).

8. Method according to Claim 7, in which said reply (SDRep) includes a weight (W) representative of functional characteristics or the location of the UPnP-controller device (DMC).

9. Method according to Claim 7, in which said reply (SDRep) includes a description of the UPnP-controller device (DMC).

10. Method according to Claim 7, in which said request includes, as a search criterion, an identifier (CID) of at least one command protocol supported by a terminal (MT) and intended to be used for sending a command from the client module (P1) to the server module.

11. Client module (P1), able to be incorporated in a terminal (MT), this client module including:
- means for triggering a broadcast of a search request (SDReq) over a telecommunications network (MN);
- means for processing at least one first reply (SDRep) to said request, said reply including addressing data (@MAPI) required to communicate with at least one server module (MAPI), fitted to trigger on command an execution by a UPnP-controller device (DMC) of at least one predefined action (UC).

12. Module (P2) for processing a search request broadcast by a client module (P1) over a telecommunications network (MN), said processing module including means for generating at least one reply (SDRep) intended to be sent to said client module, said reply including addressing data (@MAPI) required to communicate with at least one server module (MAPI), which is fitted to trigger on command an execution of at least one predefined action (UC) by a UPnP-controller device (DMC).

13. Server module (MAPI), known to a processing module according to Claim 12, the server module including means (F50) for triggering the execution, by a UPnP-controller device (DMC), of an action (UC) corresponding to a command (AA) issued by a client module according to Claim 11.

14. Recording medium, including program instructions for the execution of the steps of a method according to any one of Claims 1 to 10, when said program is executed by a data processor (11;21).

15. Signal (SIG1) conveying a search request (SDReq) from an entity that is fitted to trigger, on command from a client module, an execution of at least one action (UC) by a UPnP-controller device (DMC) and which is such that there exists at least one command protocol, suitable for sending a said command and supported both by the client module and by the server module, said signal being intended to be broadcast over a telecommunications network by said client module.

16. Signal (SIG2) conveying a message (SDRep) comprising addressing data (@MAPI) required to communicate with at least one server module (MAPI), said message being intended to be transmitted to a client module in reply to a search request (SDReq) from an entity that is fitted to trigger, on command from the client module, an execution of at least one action (UC) by a UPnP-controller device (DMC).
